# EUROPÄISCHE PATENTANMELDUNG

(11) **EP 1 481 717 A1**
(43) Veröffentlichungstag der Anmeldung: **01.12.2004**
(21) Anmeldenummer: 04012438.0
(22) Anmeldetag: 26.05.2004
(51) Int. Cl.: B01D 50/00

(54) **Verfahren und Filtervorrichtung zum Reinigen von Luft, insbesondere zum Entfernen von Stäuben und Rauchgasen in Arbeitsumgebungen**

(30) Priorität: 27.05.2003 IT BL20030006
(71) Anmelder: Laser Service S.n.c. di Ciotti Ivan & Mario Bruno, 32040 Domegge di Cadore (BL) (IT)
(72) Erfinder: Ciotti, Mario, Bruno, 32040 Domegge di Cadore (BL) (IT)
(74) Vertreter: Beszédes, Stephan G., Dr.

(57) **Zusammenfassung**

Gegenstand der Erfindung ist ein Verfahren zum Reinigen von Luft durch mechanisches und/oder elektrostatisches Filtrieren und Abtrennen und Abführen der Verunreinigungen, wobei die Luft nach dem Filtrieren durch einen eine Fläche bedeckenden Schleier von Wasser oder einer ähnlichen Flüssigkeit durchströmen gelassen wird und die festen Verunreinigungen darin sich absetzen gelassen, gesammelt und abgeführt werden.

Gegenstand der Erfindung ist auch eine Filtervorrichtung, umfassend einen Filterturm (T) mit Filterwänden (8) zum Sammeln und Verdichten der zu filtrierenden Luft in diesem Filterturm (T), wobei die Luft durch deren Druck durch die Filterwände (8) in einen äußeren Raum (92) des Filterturmes (T) gedrückt wird, wobei die Außenflächen der Filterwände (8) von einem Wasserschleier oder dem Schleier einer ähnlichen Flüssigkeit bedeckt sind, und am Kopf des Filterturmes (T) ein Becken (60) mit Schlitzen (64), zu welchem eine Leitung (62) aus einer Basiswanne (10) mit einem Boden (20) und einem Abflußtrichter (21) zum Absetzenlassen und Sammeln der ausgetragenen festen Verunreinigungen geführt ist, angeordnet ist.

## Beschreibung

Die Erfindung betrifft ein Verfahren und eine Vorrichtung zum Filtern und Reinigen von Luft, insbesondere zum Entfernen von Stäuben und Rauchgasen in Arbeitsumgebungen, in denen Arbeiten, beispielsweise mit Laserschneidevorrichtungen oder mechanischen Schneideapparaten durchgeführt werden, oder in denen Schweißdämpfe, chemische Stäube, Holzstäube oder andere staubförmige Materialien, auch Kunststoffstäube, vorkommen, die unvermeidlich dazu neigen, sich in der Luft auszubreiten und die Arbeitsumgebung zu belasten.

Aus dem Stand der Technik sind verschiedene Vorrichtungen zur Filterung und Reinigung von Luft und Abscheidung von bei industriellen Verfahren anfallenden Luftbelastungenbeziehungsweise -verunreinigungen, wie Rauchgasen, Ölnebeln, Gasen, Dämpfen, Stäuben und Feinstäuben einschließlich solcher Belastungen, die durch Schweißen oder Funkenerosionsverfahren erzeugt werden, bekannt. Alle Vorrichtungen verfolgen den Zweck, die Luft in der Arbeitsumgebung so atembar wie irgend möglich zu machen.

Das Funktionsprinzip dieser bekannten Vorrichtungen basiert im wesentlichen auf mechanischen Arbeitsgrundlagen, wie Absaugen, Verdichten und Fördern der staubhaltigen Luft durch einen oder mehrere Scheiben- oder Trommelfilter, welche die Luft zwangsweise durchströmen muß und in denen die von ihr geförderten Stäube oder Schadstoffe zurückgehalten werden. Dabei sind die Anforderungen an die Filter grundsätzlich der Korngrößenverteilung der auszutragenden Fracht direkt proportional.

Insbesondere für feine Stäube sind in der Regel mehrere oder mehrschichtige Filter notwendig, die in jedem Fall sehr enge Maschen aufweisen müssen, um die Staubpartikeln am Durchtritt zu hindern und die Abgabe von ausreichend sauberer Luft sicherzustellen.

Für die Abscheidung solcher feinen Stäube besteht eine bekannte technische Alternative oder, besser gesagt, ein ergänzend zum mechanischen Filtern anwendbares Verfahren, darin, elektrostatische Filter zu verwenden, die Korngrößen mit Durchmessern von Bruchteilen eines Mikrometers adsorbieren können.

Wenn schließlich in der mit Stäuben oder Verunreinigungen belasteten Luft auch Gerüche, chemische Stoffe oder Lösemittel vorhanden sind, die entfernt werden sollen, kennt der Stand der Technik die Möglichkeit, zusätzlich und im Anschluß an die vorstehend erwähnten mechanischen oder elektrostatischen Filterstufen entsprechende geeignete Filter, zum Beispiel auf Aktivkohlebasis, nachzuschalten.

Durch die getrennte oder auch in verschiedener Weise kombinierte Verwendung der oben beispielhaft erwähnten Verfahren ist es nun tatsächlich möglich, eine ausreichende Reinigung der Luft zu erzielen, sei es um diese in die Arbeitsumgebung zurückzuführen oder um sie in die Außenumgebung abzugeben. Die Luftqualität ist nämlich ein Faktor, der die Lebensbedingungen wesentlich beeinflußt und der im übrigen auch Gegenstand strenger gesetzlicher Vorschriften ist.

Allerdings sind zum Erreichen dieses Zieles Vorrichtungen erforderlich, deren Verwendung in kleinen Produktionsstätten oder jungen Betrieben in der Anfangsphase auf Grund der Größe und der Kompliziertheit der Vorrichtungen und der Höhe der Kosten nicht immer leicht zu bewerkstelligen ist. Wenn der Zugriff auf diese bekannten Verfahren nicht möglich ist, greift man sehr häufig auf nur begrenzt wirksame Lösungen zurück oder verzichtet sogar ganz auf jede Anstrengung zur Reinhaltung der Luft, was sich in beiden Fällen negativ auf die Gesundheit der einzelnen Mitarbeiter auswirkt, aber auch Gesundheitsprobleme für die Allgemeinheit schafft.

Vor der vorliegenden Erfindung bestand die Notwendigkeit, ein einfaches Verfahren und eine Vorrichtung zum Filtern und Reinigen von Luft zu schaffen, die nicht zu groß sein darf und deren Kosten sich in einem gewissen Rahmen halten und die sich außerdem durch höchste Einfachheit und Effizienz in Betrieb und Wartung auszeichnet, damit sie auch in all jenen Betrieben eingesetzt werden kann, die über wenig Platz und geringe wirtschaftliche Möglichkeiten verfügen und für welche die derzeit vorhandenen technisch hoch entwickelten und kostspieligen Lösungen mit hohem Platzbedarf nicht in Frage kommen.

Vorrangig liegt demnach der vorliegenden Erfindung die Aufgabe zugrunde, ein Verfahren zum Reinigen von Luft, welches einfach ist und mit platzsparenden und möglichst einfachen Vorrichtungen zu betreiben ist, gleichzeitig aber eine gute Reinigungsqualität sicherstellt, sowie eine Filtervorrichtung zur Durchführung dieses Verfahrens, die platzsparend und so einfach wie möglich aufgebaut ist, zu schaffen.

Eine weitere der Erfindung zugrundeliegende Aufgabe ist es, eine Filtervorrichtung zu schaffen, die eine unkomplizierte Entnahme und Entfernung der ausgetragenen Stäube erlaubt.

Eine weitere der Erfindung zugrundeliegende Aufgabe ist es, eine derartige Vorrichtung so auszulegen, daß sie in kleinen Betrieben beziehungsweise an Orten mit wenig Platz einfach verwendet werden kann, was durch den/die einfache(n) Aufbau und Funktionsweise und somit wegen des geringen Platzbedarfs und der niedrigen Anschaffungs- und Betriebskosten der Vorrichtung erreicht wird.

Nicht zuletzt liegt der Erfindung die Aufgabe zugrunde, ein Verfahren und eine Filtervorrichtung zu schaffen, die gut zum Entfernen von Gerüchen geeignet sind, indem entsprechend behandeltes Wasser verwendet wird.

Es ist eine zusätzliche der Erfindung zugrundeliegende Aufgabe, das Verfahren und die Filtervorrichtung in Verbindung mit anderen, herkömmlichen Luftreinigungsverfahren beziehungsweise -Vorrichtungen einsetzen zu können, um beispielsweise Gerüche zu entfernen.

Das Obige wurde überraschenderweise erfindungsgemäß durch die Verbindung der herkömmlichen mechanischen Filtrierverfahren mit einem neuartigen Waschverfahren mittels Wasserschleier erreicht.

Gegenstand der Erfindung ist ein Verfahren zum Reinigen von Luft, insbesondere zum Entfernen von Stäuben und Rauchgasen in Arbeitsumgebungen, durch mechanisches und/oder elektrostatisches Filtrieren und Abtrennen und Abführen der Verunreingigungen, welches dadurch gekennzeichnet ist, daß die Luft nach dem Filtrieren durch einen eine Fläche bedeckenden Schleier von Wasser oder einer ähnlichen Flüssigkeit durchströmen gelassen wird und die festen Verunreinigungen in diesem/dieser sich absetzen gelassen, gesammelt und abgeführt werden.

Vorteilhaft wird als Fläche, welche vom Schleier bedeckt ist, die luftstromabwärts gelegene Fläche eines Filters verwendet.

Zweckmäßig wird die Luft vor dem Filter verdichtet und damit zur luftstromabwärts liegenden Fläche des Filters durchgedrückt.

Vorzugsweise wird das Wasser oder die ähnliche Flüssigkeit nach dem Absetzenlassen der festen Verunreinigungen zur Schleierbildung zurückgeführt, insbesondere über ein über dem Filter angeordnetes Becken mit Schlitzen beziehungsweise Löchern.

Es ist auch bevorzugt, daß als ähnliche Flüssigkeit eine wäßrige, insbesondere geruchbindende, ganz besonders Natriumhypochlorit (NaClO) und Natriumhydroxid (NaOH), enthaltende, verwendet wird.

Ein wesentliches Prinzip der vorliegenden Erfindung ist es, daß ein Filterturm mit Filterwänden hergestellt und die zu filternde Luft im Inneren dieses Filterturmes gesammelt und verdichtet wird, wobei sie vorher einen an der Filterturmbasis bereitgestellten Behälter mit Wasser oder einer wäßrigen Flüssigkeit durchströmt. Die Luft wird dann durch die Wirkung des Druckunterschiedes, der zwischen der inneren Kammer und der äußeren Kammer des durchlässigen Filterturmes besteht, in die äußere Kammer des Turmes gepreßt. An den durchlässigen Filterkammerwänden fließt ein kontinuierlich erzeugter Wasserschleier, der aus einem am Kopf des Filterturmes befindlichen Behälter gespeist wird und dazu dient, im Zusammenwirken mit den durchlässigen Filterwänden die größtmögliche Menge an Stäuben zurückzuhalten und gleichzeitig deren Ansammlung und Ablagerung an einer Basis zu bewirken, die ihre Entsorgung erlaubt. Die von den Stäuben gereinigte Luft kann nach außen abgegeben oder aber in die Arbeitsumgebung zurückgeführt werden, auch unter möglicher Zwischenschaltung anderer bekannter Filtervorrichtungen, beispielsweise zum Zweck einer vollständigen Absorption von Gerüchen.

Gegenstand der Erfindung ist auch eine Filtervorrichtung zur Durchführung des erfindungsgemäßen Verfahrens, umfassend einen Filterturm mit Filterwänden zum Sammeln und Verdichten der zu filtrierenden Luft in diesem Filterturm, wobei die Luft durch deren Druck durch die Filterwände des Filterturmes in einen äußeren Raum des Filterturmes gedrückt wird, dadurch gekennzeichnet, daß die Außenflächen der Filterwände des Filterturmes ständig von einem Wasserschleier oder dem Schleier einer ähnlichen Flüssigkeit bedeckt sind, und am Kopf des Filterturmes ein Becken mit Schlitzen beziehungsweise Löchern, insbesondere Kapillaren, zum Speisen des Schleiers, zu welchem Becken eine Leitung aus einer Basiswanne mit einem Boden und einem Abflußtrichter zum Absetzenlassen und Sammeln der von den Filterwänden und vom an deren Außenseite erzeugten Schleier ausgetragenen festen Verunreinigungen, insbesondere Stäube, geführt ist, angeordnet ist.

Zweckmäßig hat die erfindungsgamäße Filtervorrichtung eine oder mehrere Ansaugöffnung(en) in Verbindung mit einem oder mehreren Saugzug/Saugzügen zum Einsaugen der belasteten Luft und eine mit diesem/diesen verbundene Leitung zum Drücken der belasteten Luft in das mit den Filterwänden ausgestattete Innere des Filterturmes, wobei der Ausgang beziehungsweise das obere Ende der Leitung oberhalb des Wasserstandes beziehungsweise des Füllstandes der ähnlichen wäßrigen Flüssigkeit in der Basiswanne angeordnet ist.

Es ist auch zweckmäßig, daß der Filterturm teilweise in das Wasser/die wäßrige Flüssigkeit, das/die sich in der Basiswanne befindet, eingetaucht ist, und von einer perforierten Ebene wie einem gelochten Bodenblech, das/die auch daran beteiligt ist, die Leitung durch welche die belastete Luft zugeführt wird, zu fixieren, getragen und fixiert wird.

Vorzugsweise besteht der Filterturm im wesentlichen aus mehreren Pfosten, die an der perforierten Ebene sowie an einem Deckblech befestigt und untereinander auch durch ein oder mehrere Gitter oder andere Querstreben verbunden sind, welche die Befestigung einer Reihe der Filterwände ermöglichen und ihnen Halt geben.

Es ist auch bevorzugt, daß die Filterwände beziehungsweise - flächen an einer jeden Seite des Filterturmes angebracht sind und aus einer oder mehreren Schichten aus einem durchlässigen beziehungsweise porösen beziehungsweise schwammartigen Material vom Typ eines Acrylfasergewebes oder Schaumgummis, die eine der Korngrößenverteilung der abzuscheidenden Stäube entsprechende Dicke aufweisen, bestehen.

Zweckmäßig ist das Becken am Kopf des Filterturmes an jeder Seite des Filterturmes mit Schlitzen beziehungsweise Löchern ausgestattet, und an der Basiswanne eine Pumpe zur Entnahme von Wasser beziehungsweise wäßriger Flüssigkeit angeordnet.

Zweckmäßig sind die Schlitze beziehungsweise Löcher am Becken zum Austritt des darin befindlichen Wassers oder der darin befindlichen wäßrigen Flüssigkeit zum Bilden eines kontinuierlichen, sich entlang einer jeden Filterwand des Filterturmes ausbreitenden und abfließenden, durch die Filterwände durchgetretene Anteile von feinen Stäuben bindenden und diese zum Boden und Abflußtrichter der Basiswanne befördernden Schleiers, eingerichtet.

Vorzugsweise weist der außerhalb des Filterturmes angeordnete äußere Raum Außenwände und einen Deckel oder ein Dach auf, wobei an diesen äußeren Raum zur Verstärkung der Saugwirkung der Filterwände zur Erzeugung eines Unterdruckes ein oder mehrere Saugzug/Saugzüge, zweckmäßig über ein oder mehrere Ansaugrohr(e), zum Abziehen der durch die Filterwände gefilterten Luft zur Zurückführung in die Innenraumumgebung oder zur Abgabe nach außen oder zur Zuleitung zu einer nachfolgenden herkömmlichen Filterstufe angeschlossen ist/sind.

Vorzugsweise besteht der kontinuierliche Schleier an den Filterwänden aus Leitungswasser oder einer wäßrigen Lösung enthaltend Natriumhypochlorit (NaClO) und Natriumhydroxid (NaOH), zur Kombination der Löse- und Entfettungswirkung des alkalischen Reinigers mit der Oxidationswirkung des Natriumhypochlorites zur Entfernung auch etwaig vorhandener geruchbildender organischer Substanzen durch die chemische Oxidation ihrer Moleküle.

Die Erfindung wird an Hand der folgenden beispielhaften Ausführungsform in Verbindung mit den beiliegenden Zeichnungen näher erläutert.

Es zeigen:

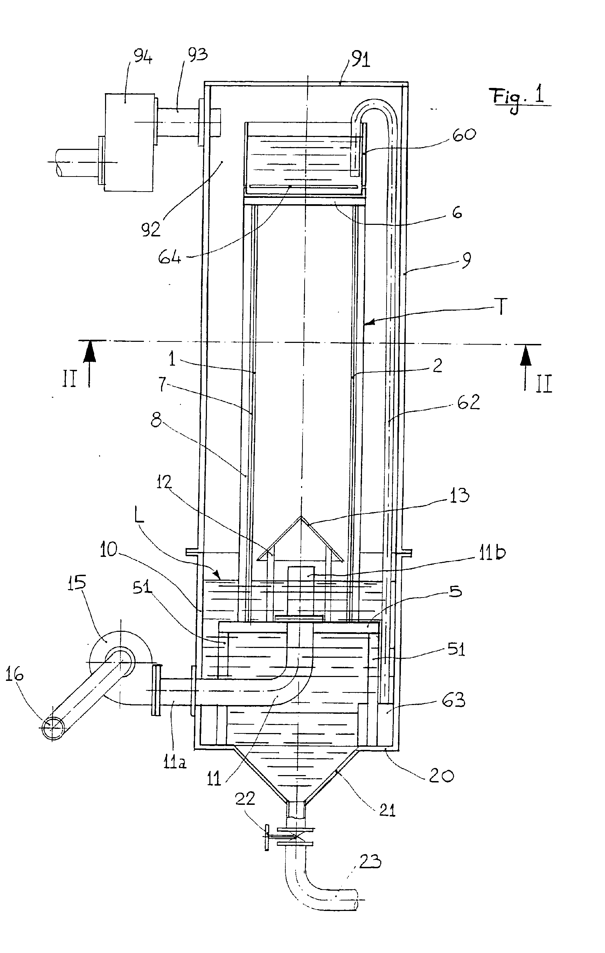

- Fig. 1: eine Längsschnittansicht einer Filtervorrichtung zur Luftreinigung nach der Erfindung und

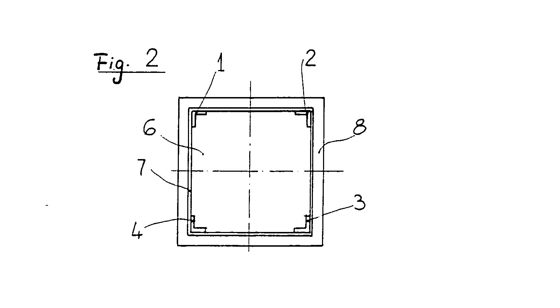

- Fig. 2: eine Querschnittansicht des Filterturmes der Filtervorrichtung der Fig. 1 in deren Schnittebene II - II.

In beiden Zeichnungen sind die dargestellten beziehungsweise angedeuteten Details jeweils mit denselben Bezugsziffern versehen.

Nach der in den Zeichnungen beispielhaft dargestellten konstruktiven Ausführungsform besteht ein Filterturm T aus einem Gerüst mit vier Pfosten 1, 2, 3, 4, zum Beispiel mit L-Profilen, die untereinander verbunden sind und durch ein gelochtes Bodenblech 5 und ein Deckblech 6 zusammengehalten werden. Eine Hülle in Form eines Metallgitters 7 ist starr an den Außenseiten der Pfosten 1, 2, 3, 4 angebracht und bietet Halt für eine oder mehrere daran befestigte Lagen Material von Filterwänden 8, das, in Abhängigkeit von dem voraussichtlichen Einsatzzweck der beschriebenen Filtervorrichtung, beispielsweise aus Schaumgummi von unterschiedlicher Beschaffenheit und Stärke oder aus Acrylfasergewebe mit ausreichender Dicke bestehen kann.

Das gelochte Bodenblech 5 ist auf Standbeinen 51 angeordnet, die es über den Boden einer zur Aufnahme von Wasser bestimmten Basiswanne 10 heben.

Das gelochte Bodenblech 5 ist mit einer Seite der Basiswanne 10 durch eine Rohrleitung 11 verbunden, die mit einem Ende [unteres Ende] 11a aus der Basiswanne 10 herausragt, während das andere Ende [oberes Ende] 11b unterhalb des Randes der Basiswanne 10, aber oberhalb des Wasserstandes L beziehungsweise des Füllstandes L der wäßrigen Flüssigkeit in der Basiswanne 10 angeordnet ist.

Das obere Ende 11b der Rohrleitung 11 ist mit einer konischen Abdeckung 13 versehen, die Beine oder Abstandhalter 12 aufweist, deren Zweck unten näher erläutert wird.

Der Boden 20 der Basiswanne 10 ist mit einem Abflußtrichter 21 ausgestattet, der über ein Schließventil 22 in eine Abflußleitung 23 mündet. Diese Elemente sind zur Entleerung der Basiswanne 10 und zum Wasseraustausch sowie zum Sammeln der Stäube, die aus der gereinigten Luft ausgetragen worden sind, befähigt.

Das Deckblech 6 des Filterturmes T kann den Boden eines Becken 60 bilden oder zumindest trägt es ein darauf befindliches Becken 60, das mittels einer Steigleitung 62 und einer Pumpe 63 ständig mit Wasser beziehungsweise einer wäßrigen Flüssigkeit, das/die dem Basisbecken 10 entnommen wird, gespeist wird.

Das Becken 60 ist mit Schlitzen oder Reihen von Kapillarlöchern 64 versehen, welche die kontinuierliche Bildung eines Schleiers von Wasser/einer wäßrigen Flüssigkeit auf allen Seiten sicherstellen. Dieser Schleier ist dazu bestimmt, an den Außenflächen der jeweiligen Seiten beziehungsweise Auflagen aus Filtermaterial der Filterwände 8 herunter zurück in die Basiswanne 10 zu fließen.

Selbstverständlich ist die Basiswanne 10 über einen Niveauregler an das Wasserversorgungsnetz angeschlossen, damit der gewünschte Wasserstand L beziehungsweise Füllstand L der wäßrigen Flüssigkeit konstant sichergestellt ist. Dabei ist die Pumpe 63 so kalibriert, daß eine entsprechende Wassermenge beziehungsweise Menge wäßriger Flüssigkeit in das Becken 60 gefördert wird, damit die kontinuierliche Bildung des Schleiers entlang der Filterwände 8 sichergestellt ist.

In der veranschaulichten beispielhaften Ausführungsform sind an den Rändern der Basiswanne 10, vorzugsweise in dichter Verbindung, Außenwände 9 angebracht, die mit einem Deckel oder Dach 91 abschließen und so einen geschlossenen äußeren Raum beziehungsweise eine geschlossene äußere Kammer 92 um den Filterturm T herum bilden.

Mindestens eine von den Außenwänden 9 ist mit einem Ansaug- beziehungsweise Ableitungsrohr 93 versehen, das mit einem Saugzug 94 verbunden ist, der die Luft absaugt, die sich im äußeren Raum beziehungsweise in der äußeren Kammer 92 befindet.

Die Vorrichtung ist ferner mit mindestens einem Saugzug 15 ausgestattet, der über eine oder mehrere Ansaugöffnung(en) 16 die belastete Luft aus der Umgebung oder vom Entstehungsort der Verunreinigung einsaugt und in den Filterturm T leitet.

Im folgenden wird nun die Funktionsweise dieser Vorrichtung zusammenfassend dargestellt.

Die Vorrichtung wird durch das gleichzeitige Einschalten der Saugzüge 15, 94 und der Pumpe, wie Motorpumpe 63 in Gang gesetzt. Sogleich beginnt der Saugzug 15 damit, die belastete Luft durch seine Ansaugöffnungen 16 einzusaugen, während die Pumpe 63 bereits damit begonnen hat, aus der Basiswanne 10 entnommene[s] Wasser/wäßrige Flüssigkeit in das obere Becken 60 zu fördern, und der Saugzug 94 damit beginnt, die Luft aus dem geschlossenen äußeren Raum beziehungsweise der Kammer 92 abzusaugen.

Die durch den Saugzug 15 angesaugte belastete Luft wird in die Rohrleitung 11 gedrückt und gelangt so in die innere Kammer des Filterturmes T, wo sie ausreichend verdichtet wird. Der gleichzeitige Druckabfall im äußeren Raum beziehungsweise in der äußeren Kammer 92, die sich zwischen dem Filterturm T und den Außenwänden 9, welche in einem Stück mit der Basiswanne 10 gefertigt sind, befindet, zwingt die belastete Luft in den äußeren Raum beziehungsweise die äußere Kammer 92, wozu sie die Filterwände 8 durchströmen muß.

Beim Kontakt mit den Innenflächen dieser Filterwände 8 gibt die Luft die schwereren Schmutzteilchen an die Innenflächen der Filterwände 8 ab, wo sie zurückgehalten werden, während der feinere Schmutzanteil durch den Schleier von Wasser/wäßriger Flüssigkeit, der aus dem Becken 60 gespeist wird und kontinuierlich an den Außenflächen der Filterwände 8 entlang fließt, zurückgehalten, ausgewaschen und entfernt wird.

Die so gereinigte Luft gelangt in den äußeren Raum beziehungsweise in die äußere Kammer 92 und kann mittels des Saugzuges 94 durch das Ansaug- beziehungsweise Ableitungsrohr 93 zurück in die Arbeitsumgebung geleitet oder nach außen abgegeben oder zur Abscheidung von Gerüchen oder chemischen Stoffen, die entfernt werden sollen, auch noch durch eine herkömmliche Filtervorrichtung geleitet werden.

Das Abfließen des Schleiers von Wasser/wäßriger Flüssigkeit entlang der Filterwände 8 des Filterturmes T führt auf Grund ihrer porösen und durchlässigen Eigenschaften dazu, daß diese Filterwände 8 in ihrer gesamten Dicke befeuchtet werden, wodurch sich die Abscheidewirkung in Bezug auf die Stäube in der gesamten Dicke des Filtermateriales verstärkt.

Andererseits kann die poröse und durchlässige Beschaffenheit der Filterwände 8 dazu beitragen, daß sich im Inneren des Filterturmes T Wirbel in der verdichteten Luft bilden, was zu der Wahrscheinlichkeit führt, daß Wassertropfen/Tropfen von wäßriger Flüssigkeit von diesen Filterwänden 8 in den Innenraum abgegeben werden.

Um nun zu vermeiden, daß Wasser/wäßrige Flüssigkeit in den Ausgang [oberes Ende] 11b der Rohrleitung 11 eindringen kann, ist die Abdeckung 13 vorgesehen, welche die Beine oder Abstandhalter 12 aufweist, so daß jegliches Tropfen in die Öffnung der Rohrleitung 11 vermieden werden kann, ohne den Zufluß der verschmutzten Luft zu behindern.

Es ist eine der Aufgaben der vorliegenden Erfindung, einen beträchtlichen Teil der Gerüche oder Lösemittel zu entfernen, welche die Arbeitsumgebung gegebenenfalls belasten.

Die beschriebene Vorrichtung löst auch diese Aufgabe, indem bei Bedarf das Leitungswasser durch Wasser, dem Natriumhypochlorit (NaClO) und Natriumhydroxid (NaOH) zugesetzt ist, ersetzt wird, um die Löse- und Entfettungswirkung des alkalischen Reinigers mit der Oxidationswirkung des Natriumhypochlorites zu kombinieren.

Wenn die Luft von der inneren Kammer des Filterturmes T in seinen äußeren Raum beziehungsweise seine äußere Kammer 92 übertritt und dabei den Schleier aus wäßriger Natriumhypochloritlösung und Natronlauge durchströmt, wird ein breites Spektrum geruchbildender organischer Stoffe durch die chemische Oxidation ihrer Moleküle entfernt.

Selbstverständlich kann immer noch eine umfassendere Reinigung und Entfernung von Gerüchen und chemischen Schadstoffen erzielt werden, indem die Abluft durch den Saugzug 94 zu einem herkömmlichen Geruchsreiniger geleitet wird, wie bereits erläutert wurde.

Aus der vorstehenden Beschreibung ist ersichtlich, wie mit einer extrem einfach und zweckmäßig konstruierten Vorrichtung, die darüber hinaus wenig Platz beansprucht und geringe Kosten verursacht, eine Reinigung der Luft mit gutem Ergebnis möglich ist, und dies auch in kleinen Betrieben erreicht werden kann, was eines der vorstehend angegebenen Aufgaben der Erfindung darstellt.

Diese einfache Konstruktion stellt auch die leichte Handhabung und Wartung der Vorrichtung sicher, was ein weiteres der vorstehend angegebenen Aufgaben der Erfindung ist, und ermöglicht außerdem die unkomplizierte Verbindung mit anderen Filtrier- beziehungsweise Abscheideverfahren, was eine weitere Aufgabe der Erfindung ist.

Selbstverständlich können neben der vorstehend beschriebenen Ausführungsform auch weitere konstruktive Lösungen gewählt werden.

Beispielhaft sei hier die Möglichkeit genannt, den Saugzug 94 und den Deckel oder das Dach 91 wegzulassen, so daß der Druckunterschied zwischen der Innenatmosphäre des Filterturmes T und dem offenen Raum 92 zwar geringer ist, aber immer noch ausreicht, um die Luft zu filtern und unmittelbar in die Umgebung freizusetzen.

Es ist ferner möglich, den Filterturm T in einer beliebigen Form herzustellen, was auch für die Basiswanne 10 und das Becken 60 gilt. Ebenso kann als Filterfläche 8 jedes beliebige Material verwendet werden, und auch mehrere Schichten sind möglich, sofern entsprechend geeignete Halteund Befestigungsgitter 7 gewählt werden.

Diese und weitere Varianten oder Abwandlungen sind in jedem Fall von dem Schutzumfang der Erfindung umfaßt.

## Patentansprüche

1. Verfahren zum Reinigen von Luft, insbesondere zum Entfernen von Stäuben und Rauchgasen in Arbeitsumgebungen, durch mechanisches und/oder elektrostatisches Filtrieren und Abtrennen und Abführen der Verunreinigungen, **dadurch gekennzeichnet, daß** die Luft nach dem Filtrieren durch einen eine Fläche bedeckenden Schleier von Wasser oder einer ähnlichen Flüssigkeit durchströmen gelassen wird und die festen Verunreinigungen in diesem/dieser sich absetzen gelassen, gesammelt und abgeführt werden.

2. Verfahren nach Anspruch 1, **dadurch gekennzeichnet, daß** als Fläche, welche vom Schleier bedeckt ist, die luftstromabwärts gelegene Fläche eines Filters (8) verwendet wird.

3. Verfahren nach Anspruch 1 oder 2, **dadurch gekennzeichnet, daß** die Luft vor dem Filter (8) verdichtet und damit zur luftstromabwärts liegenden Fläche des Filters (8) durchgedrückt wird.

4. Verfahren nach Anspruch 1 oder 2, **dadurch gekennzeichnet, daß** das Wasser oder die ähnliche Flüssigkeit nach dem Absetzenlassen der festen Verunreinigungen zur Schleierbildung zurückgeführt wird.

5. Verfahren nach Anspruch 1 bis 3, **dadurch gekennzeichnet, daß** als ähnliche Flüssigkeit eine wäßrige, insbesondere Natriumhypochlorit (NaClO) und Natriumhydroxid (NaOH), enthaltende, verwendet wird.

6. Filtervorrichtung zur Durchführung des Verfahrens nach Anspruch 1 bis 5, umfassend einen Filterturm (T) mit Filterwänden (8) zum Sammeln und Verdichten der zu filtrierenden Luft in diesem Filterturm (T), wobei die Luft durch deren Druck durch die Filterwände (8) des Filterturmes (T) in einen äußeren Raum (92) des Filterturmes (T) gedrückt wird, **dadurch gekennzeichnet, daß** die Außenflächen der Filterwände (8) des Filterturmes (T) ständig von einem Wasserschleier oder dem Schleier einer ähnlichen Flüssigkeit bedeckt sind, und am Kopf des Filterturmes (T) ein Becken (60) mit Schlitzen beziehungsweise Löchern (64) zum Speisen des Schleiers, zu welchem Becken (60) eine Leitung (62) aus einer Basiswanne (10) mit einem Boden (20) und einem Abflußtrichter (21) zum Absetzenlassen und Sammeln der von den Filterwänden (8) und vom an deren Außenseite erzeugten Schleier ausgetragenen festen Verunreinigungen, insbesondere Stäube, geführt ist, angeordnet ist.

7. Filtervorrichtung nach Anspruch 6, **gekennzeichnet durch** eine oder mehrere Ansaugöffnung(en) (16) in Verbindung mit einem oder mehreren Saugzug/Saugzügen (15) zum Einsaugen der belasteten Luft und eine mit diesem/diesen verbundene Leitung (11) zum Drücken der belasteten Luft in das mit den Filterwänden (8) ausgestattete Innere des Filterturmes (T), wobei der Ausgang (11b) der Leitung (11) oberhalb des Wasserstandes beziehungsweise des Füllstandes der ähnlichen wäßrigen Flüssigkeit in der Basiswanne (10) angeordnet ist.

8. Filtervorrichtung nach Anspruch 6 oder 7, **dadurch gekennzeichnet, daß** der Filterturm (T) teilweise in das Wasser/die wäßrige Flüssigkeit das/die sich in der Basiswanne (10) befindet, eingetaucht ist, und von einer perforierten Ebene (5) die auch daran beteiligt ist, die Leitung (11), durch welche die belastete Luft zugeführt wird, zu fixieren, getragen und fixiert wird.

9. Filtervorrichtung nach Anspruch 6 bis 8, **dadurch gekennzeichnet, daß** der Filterturm (T) im wesentlichen aus mehreren Pfosten (1, 2, 3 und 4), die an der perforierten Ebene (5) sowie an einem Deckblech (6) befestigt und untereinander auch durch ein oder mehrere Gitter (7) oder andere Querstreben verbunden sind, welche die Befestigung einer Reihe der Filterwände (8) ermöglichen und ihnen Halt geben, besteht.

10. Filtervorrichtung nach Anspruch 6 bis 9, **dadurch gekennzeichnet, daß** die Filterwände beziehungsweise - flächen (8) an einer jeden Seite des Filterturmes (T) angebracht sind und aus einer oder mehreren Schichten aus einem durchlässigen beziehungsweise porösen beziehungsweise schwammartigen Material vom Typ eines Acrylfasergewebes oder Schaumgummis, die eine der Korngrößenverteilung der abzuscheidenden Stäube entsprechende Dicke aufweisen, bestehen.

11. Filtervorrichtung nach Anspruch 1 bis 10, **dadurch gekennzeichnet, daß** das Becken (60) am Kopf des Filterturmes (T) an jeder Seite des Filterturmes (T) mit Schlitzen beziehungsweise Löchern (64) ausgestattet ist, und an der Basiswanne (10) eine Pumpe (63) zur Entnahme von Wasser beziehungsweise wäßriger Flüssigkeit angeordnet ist.

12. Filtervorrichtung nach Anspruch 6 bis 11, **dadurch gekennzeichnet, daß** die Schlitze beziehungsweise Löcher (64) am Becken (60) zum Austritt des darin befindlichen Wassers oder der darin befindlichen wäßrigen Flüssigkeit zum Bilden eines kontinuierlichen, sich entlang einer jeden Filterwand (8) des Filterturmes (T) ausbreitenden und abfließenden, durch die Filterwände (8) durchgetretene Anteile von feinen Stäuben bindenden und diese zum Boden (20) und Abflußtrichter (21) der Basiswanne (10) befördernden Schleiers eingerichtet sind.

13. Filtervorrichtung nach Anspruch 6 bis 12, **dadurch gekennzeichnet, daß** der außerhalb des Filterturmes (T) angeordnete äußere Raum (92) Außenwände (9) und einen Deckel oder ein Dach (91) aufweist, wobei an diesen äußeren Raum (92) zur Verstärkung der Saugwirkung der Filterwände (8) zur Erzeugung eines Unterdruckes ein oder mehrere Saugzug/Saugzüge (94) zum Abziehen der durch die Filterwände gefilterten Luft zur Zurückführung in die Innenraumumgebung oder zur Abgabe nach außen oder zur Zuleitung zu einer nachfolgenden herkömmlichen Filterstufe angeschlossen ist/sind.

14. Filtervorrichtung nach Anspruch 6 bis 13, **dadurch gekennzeichnet, daß** der kontinuierliche Schleier an den Filterwänden (8) aus Leitungswasser oder einer wäßrigen Lösung, enthaltend Natriumhypochlorit (NaClO) und Natriumhydroxid (NaOH), zur Kombination der Löse- und Entfettungswirkung des alkalischen Reinigers mit der Oxidationswirkung des Natriumhypochlorites zur Entfernung auch etwaig vorhandener geruchbildender organischer Substanzen durch die chemische Oxidation ihrer Moleküle besteht.
